# EUROPÄISCHE PATENTSCHRIFT

(11) **EP 2 630 016 B1**
(45) Veröffentlichungstag und Bekanntmachung des Hinweises auf die Patenterteilung: **28.12.2016**
(21) Anmeldenummer: 11752182.3
(22) Anmeldetag: 30.08.2011
(51) Int. Cl.: B60T 8/36, F16K 31/06

(54) **MAGNETVENTIL, BREMSSYSTEM**
SOLENOID VALVE, BRAKE SYSTEM
ÉLECTROVANNE, SYSTÈME DE FREINAGE

(30) Priorität: 20.10.2010 DE 102010042676
(43) Veröffentlichungstag der Anmeldung: 28.08.2013
(73) Patentinhaber: Robert Bosch GmbH, 70442 Stuttgart (DE)
(72) Erfinder: STAHR, Wolf, 74232 Abstatt (DE)
(86) Internationale Anmeldenummer: PCT/EP2011/064900
(87) Internationale Veröffentlichungsnummer: WO 2012/052212

(56) Entgegenhaltungen:
- WO-A1-01/36243
- WO-A1-2004/033945
- DE-A1- 10 027 171
- DE-A1- 10 311 486
- US-B1- 6 837 478

## Beschreibung

Die Erfindung betrifft ein Magnetventil, insbesondere für ein hydraulisches Bremssystem eines Kraftfahrzeugs, mit einer Ventilhülse, in der ein Polkern fest und ein Anker axial verlagerbar angeordnet sind, wobei der Anker mindestens eine Längsnut in seiner Mantelaußenfläche aufweist und wobei eine Scheibenfeder zwischen dem Anker und dem Polkern verspannt/verspannbar gehalten ist, wobei die dem Polkern zugewandte Stirnfläche des Ankers zumindest im Wesentlichen konvex und die dem Anker zugewandte Stirnfläche des Polkerns zumindest im Wesentlichen konkav ausgebildet ist, und wobei die Scheibenfeder ringförmig ausgebildet ist.

Ferner betrifft die Erfindung ein Bremssystem, insbesondere für ein Kraftfahrzeug, mit wenigstens einem Magnetventil zum Steuern und/oder Regeln eines Drucks und/oder eines Volumenstroms eines Hydraulikmediums des Bremssystems.

### Stand der Technik

Magnetventile und Bremssysteme der eingangs genannten Art sind aus dem Stand der Technik bekannt. Insbesondere für sicherheitsrelevante Bremsapplikationen, wie beispielsweise ABS- oder ESP-Systeme (ABS = Antiblockiersystem; ESP = elektronische Stabilitätskontrolle), werden Magnetventile verwendet, die als stromlos geschlossene Magnetventile ausgebildet sind. Derartige Ventile können mindestens zwei unterschiedliche hydraulische Einstellungen einnehmen, beispielsweise offen oder geschlossen, oder sind weiterführend auch in Teilhüben zwischen offen und geschlossen einstellbar als sogenannte Stellventile. Die geschlossene Stellung des Magnetventils im stromlosen, also nicht betätigten Zustand, wird üblicherweise über eine Druckfeder gewährleistet. Ein magnetischer beziehungsweise elektromagnetischer Aktor, der eine elektromagnetische Spule sowie magnetisch aktive Bauteile in dem Magnetventil aufweist, dient zum Schalten beziehungsweise Betätigen des Magnetventils. Als Bauteile sind dabei in dem Ventil ein Polkern sowie ein axial verlagerbarer Anker vorgesehen. Bei Betätigung wirkt der von der elektromagnetischen Spule umgebene Polkern eine Zugkraft auf den Anker aus, um diesen axial zu verlagern, wobei eine Ventilöffnung freigegeben wird. Üblicherweise weisen derartige Magnetventile eine derartige Magnetkraft-Charakteristik auf, dass die Magnetkraft bei kleiner werdendem Arbeitsluftspalt, also bei kleiner werdendem Abstand zwischen dem Anker und dem Polkern, sehr stark (exponentiell) zunimmt. Um die Magnetkraft-Charakteristik optimierend zu beeinflussen, ist es bekannt, eine Scheibenfeder zwischen dem Polkern und dem Anker anzuordnen, die parallel zu der Druckfeder wirkt und gegebenenfalls magnetisierbar ist. Dabei entsteht bei abnehmendem Arbeitsluftspalt ein radial verlaufender Nebenfluss, dessen radiale Komponente nicht mehr zur Axialkraft beiträgt und letztere - trotz kleiner werdendem Arbeitsluftspalt - nur flach ansteigen lässt. Hierdurch wird es möglich, die Magnetkraft günstig zu beeinflussen und nahe zum Idealzustand zu bringen.

Ebenfalls ist es bekannt, den Anker mit wenigstens einer Längsnut zu versehen, die zum hydraulischen Druckausgleich zwischen dem Arbeitsluftspalt und dem Druckraum an der dem Anker zugeordneten Ventilspitze dient. Die Längsnut führt jedoch bei bisher bekannten Magnetventilen dazu, dass die Federscheibe an ihrem Außenumfang nicht vollständig auf der dem Polkern zugewandten Stirnfläche des Ankers aufliegt. Insbesondere bei einer Scheibenfeder, die eine oder mehrere Radialaussparungen aufweist, würde die Feder-Charakteristik insgesamt von der Rotationslage der Scheibenfeder zu dem Anker abhängen. Darüber hinaus vermindert die Längsnut die Dauerhaltbarkeit der Scheibenfeder, da die Materialbelastung durch die Verformung über die Längsnut deutlich zunimmt.

Magnetventile dieser Art sind ebenfalls aus den Druckschriften DE 10311486, WO 2004033945, DE 10027171, US 6837478 und WO 0136243 bekannt.

### Offenbarung der Erfindung

Das erfindungsgemäße Magnetventil zeichnet sich dadurch aus, dass die Stirnfläche des Polkerns wenigstens einen mittig angeordneten Axialvorsprung als Axialanschlag für den Anker aufweist, wobei der Axialvorsprung einen Außendurchmesser aufweist, der kleiner als der Innendurchmesser der ringförmigen Scheibenfeder ausgebildet ist.

Dadurch wird gewährleistet, dass die Scheibenfeder an ihrem Außenumfang an dem Polkern und mittig an dem Anker anliegt. Dadurch übt die in dem Anker ausgebildete Längsnut keine Wirkung auf die Funktion der Scheibenfeder aus. Der Polkern ist wie üblich vollumfänglich von der Ventilhülse umschlossen und weist auch keine Längsnuten auf, da der Polkern die Ventilhülse vorzugsweise axial dicht abschließt. Durch die konvexe Ausbildung der Stirnfläche des Ankers und die konkave Ausbildung der Stirnfläche des Polkerns kann der Anker, wenn er von dem Polkern magnetisch angezogen wird, bereichsweise in den Polkern eindringen, wobei die dazwischen angeordnete Feder zwischen dem Polkern und dem Anker verspannt wird. Vorzugsweise weist die Stirnseite des Ankers mittig eine ebene Auflagefläche für die Scheibenfeder auf, wobei der Durchmesser der Auflagefläche die Feder-Charakteristik der Scheibenfeder weiter beeinflusst.

Der Außendurchmesser der Scheibenfeder entspricht vorzugsweise zumindest im Wesentlichen dem Außendurchmesser des Polkerns und/oder des Ankers. Der Innendurchmesser wird vorzugsweise entsprechend der gewünschten Federkraft der Scheibenfeder gewählt.

Besonders bevorzugt weist die Scheibenfeder mindestens eine Radialaussparung an ihrem Außenumfang auf. Durch die Aussparung wird die Federcharakteristik der Scheibenfeder für die jeweilige Anwendung optimiert. Besonders bevorzugt ist die Scheibenfeder aus einem magnetisierbaren Material gefertigt.

Vorzugsweise weist die Scheibenfeder eine Vielzahl von über ihren Außenumfang insbesondere gleichmäßig verteilt angeordneten Radialaussparungen auf. Besonders bevorzugt sind die Radialaussparungen derart ausgebildet und angeordnet, dass die Scheibenfeder an ihrem Außenumfang sternenförmig, mit schmal zulaufenden Federzungen ausgebildet ist. Da die Scheibenfeder an ihrem Außenumfang an dem Polkern anliegt, sind alle Federzungen der Scheibenfeder in Kontakt mit dem Polkern und wirken eine entsprechende Federkraft aus, unabhängig von der Rotationslage der Scheibenfeder. Das vorteilhafte Magnetventil gewährleistet somit auf einfache Art und Weise stets eine gewünschte Feder-Charakteristik der Scheibenfeder.

Um den minimalen Arbeitsluftspalt zwischen Polkern und Anker zu definieren und/oder um eine maximale Verformung der Scheibenfeder zu bestimmen, ist der Polkern an seiner Stirnfläche mit dem Axialvorsprung versehen. Wird das Magnetventil betätigt, so trifft der Anker auf den Axialvorsprung, welcher als Axialanschlag dient.

Der Axialvorsprung ist derart mittig angeordnet, dass er durch die Aussparung der Scheibenfeder hindurchgreift, beziehungsweise dass die ringförmige Scheibenfeder an dem Axialvorsprung vorbei verformt wird.

Vorzugsweise ist der Axialvorsprung kegelstumpfförmig ausgebildet, sodass seine schräge Mantelaußenfläche als Führung für die Scheibenfeder dient beziehungsweise dienen kann.

Gemäß einer Weiterbildung der Erfindung ist vorgesehen, dass der Anker in der dem Polkern zugewandten Stirnfläche eine Öffnung aufweist, durch welche ein in dem Anker gelagertes Druckstück bereichsweise verfahrbar ist beziehungsweise hindurchragt. Das Druckstück ist vorzugsweise mit einer Vorspannkraft beaufschlagt, die durch eine in dem Anker angeordnete Druckfeder erzeugt wird, sodass das Druckstück in Richtung der Öffnung gedrängt wird. Jeweils ein Axialanschlag des Ankers sowie des Druckstücks verhindern dabei, dass das Druckstück aus dem Anker hinausgedrängt wird. Das Druckstück ist derart ausgebildet, dass sein freies Ende durch die Öffnung des Ankers hindurchragt und an der Stirnseite des Polkerns anliegt. Über die Druckfeder in dem Anker wird somit eine Vorspannkraft erzeugt, die den Anker von dem Polkern weg in Richtung des auf der gegenüberliegenden Seite vorgesehenen Ventilsitzes drängt, um das Ventil im stromlosen Zustand zu schließen.

Vorzugsweise ist der Durchmesser der Öffnung kleiner ausgebildet als der Außendurchmesser des Axialvorsprungs des Polkerns. Dadurch wird gewährleistet, dass der Axialvorsprung des Polkerns beziehungsweise der Axialanschlag des Polkerns auf der Stirnfläche des Ankers im betätigten beziehungsweise bestromten Zustand des Magnetventils aufliegt. Insbesondere werden die Durchmesser zweckmäßigerweise derart gewählt, dass ein Eindringen des Axialvorsprungs in die Öffnung und ein daraus möglicherweise erfolgendes Verkanten oder Verklemmen des Magnetventils verhindert wird.

Das erfindungsgemäße Bremssystem zeichnet sich durch die Ausbildung des Magnetventils, wie es oben beschrieben wurde, aus. Vorzugsweise ist das Bremssystem als ABS- oder ESP-System eines Kraftfahrzeugs ausgebildet. Durch die vorteilhafte Ausbildung des Magnetventils wird ein die gewünschte Feder-Charakteristik dauerhaft aufweisendes Magnetventil geboten, das einfach herzustellen und zu montieren ist, wodurch das Bremssystem sicher und kostengünstig gestaltet wird.

Im Folgenden soll die Erfindung anhand der Zeichnung näher erläutert werden. Dazu zeigen
- Figur 1: ein stromlos geschlossenes Magnetventil aus dem Stand der Technik in einer Längsschnittdarstellung,
- Figur 2: eine vorteilhafte Ausbildung einer Scheibenfeder des Magnetventils,
- Figur 3: eine vorteilhafte Ausbildung des Magnetventils in einer vergrößerten Längsschnittdarstellung,
- Figuren 4A und 4B: Anlagekontakte der Scheibenfeder und
- Figuren 5A und 5B: das vorteilhafte Magnetventil in unterschiedlichen Betriebszuständen.

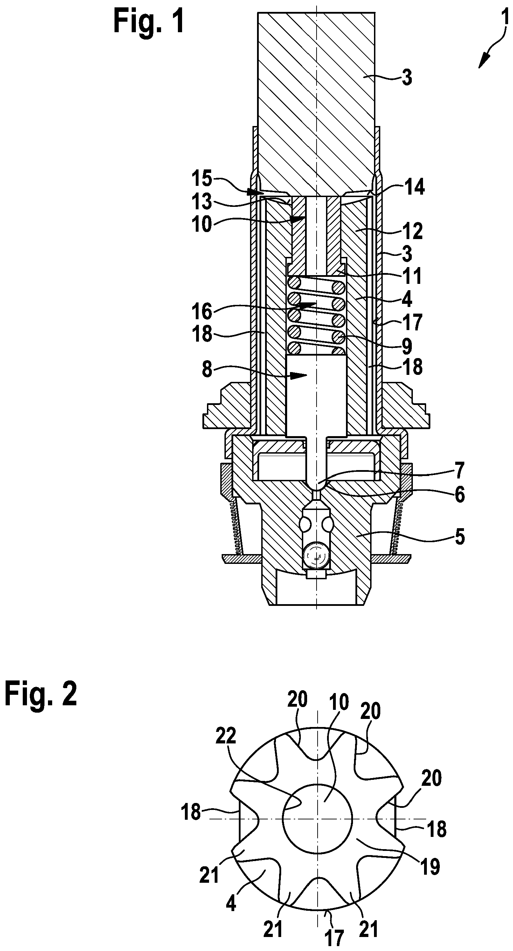

Figur 1 zeigt in einer vereinfachten Längsschnittdarstellung ein stromlos geschlossenes Magnetventil 1 aus dem Stand der Technik. Das Magnetventil 1 umfasst eine Ventilhülse 2, in welcher ein Polkern 3 fest und ein Anker 4 axial verlagerbar angeordnet sind. Der Polkern 3 verschließt dabei ein Ende der Ventilhülse 2. Auf der dem Polkern 3 gegenüberliegenden Seite ist ein Ventilkörper 5 angeordnet, der einen Ventilsitz 6 aufweist, in welchen eine Ventilspitze 7 gedrängt wird. Die Ventilspitze 7 ist einteilig mit einem Bolzen 8 ausgebildet, welcher in einer Axialaussparung 9 des Ankers 4 eingepresst ist. Die Axialaussparung 9 erstreckt sich durch den gesamten Anker 4, wobei an dem dem Bolzen 8 gegenüberliegenden Ende ein Druckstück 10 angeordnet ist. Das Druckstück 10 weist im Querschnitt gesehen eine T-Form auf, wobei der Querbalken einen in dem Anker 4 angeordneten Axialanschlag 11 bildet und der Längsbalken sich durch einen verjüngten Abschnitt 12 der Axialaussparung 9 über die dem Polkern 3 zugewandte Stirnfläche 13 des Ankers 4 hinaus erstreckt. Das Druckstück 10 liegt an der dem Anker 4 zugewandten Stirnseite 14 des Polkerns 3 an und überbrückt somit den sogenannten Arbeitsluftspalt 15 zwischen dem Polkern 3 und dem Anker 4. Die Stirnseite 14 des Polkerns 3 ist dabei konvex und die Stirnseite 13 des Ankers 4 konkav ausgebildet.

Zwischen dem Druckstück 10 und dem Bolzen 8 ist eine als Schraubenfeder ausgebildete Druckfeder 16 verspannt gehalten, die das Druckstück gegen den Polkern 3 und damit den Anker 4 mit der Ventilspitze 7 in den Ventilsitz 6 drängt.

Der Anker 4 weist in seiner Mantelaußenfläche 17 zwei gegenüberliegend angeordnete und sich über die gesamte Länge des Ankers 4 erstreckende Längsnuten 18 auf. Die Längsnuten 18 stellen eine fluidtechnische Verbindung zwischen dem Arbeitsluftspalt 15 und einer durch die Ventilspitze 7 verschließbaren Druckkammer in dem Ventilkörper 5 her, um einen Druckausgleich zwischen diesen zu gewährleisten.

Wird zum Beeinflussen und Optimieren der Federkraft-Charakteristik des Magnetventils 1 eine in Figur 1 nicht dargestellte Scheibenfeder zwischen dem Anker 4 und dem Polkern 3 angeordnet, so führen die Längsnuten 18 dazu, dass die Scheibenfeder ungleichmäßig belastet wird beziehungsweise nicht vollumfänglich auf der Stirnfläche 13 des Ankers 4 aufliegt.

Insbesondere wenn die Scheibenfeder, wie in Figur 2 in einer Draufsicht auf den Anker 4 dargestellt, als ringförmige Scheibenfeder 19 ausgebildet ist, die an ihrem Außenumfang mehrere über den Umfang verteilt angeordnete beziehungsweise ausgebildete Radialaussparungen 20 aufweist, von denen hier nur einige mit Bezugszeichen versehen sind, können die Längsnuten 18 dazu führen, dass die Scheibenfeder 19 bereichsweise nicht auf dem Anker 4 aufliegt. Die zwischen den Radialaussparungen 20 verbleibenden Radialzungen 21 können dabei je nach Rotationslage der Scheibenfeder 19 im Bereich der Längsnuten 18 liegen und dadurch nicht zur Federkraft beitragen beziehungsweise die eigentlich erwartete Feder-Charakteristik negativ beeinflussen.

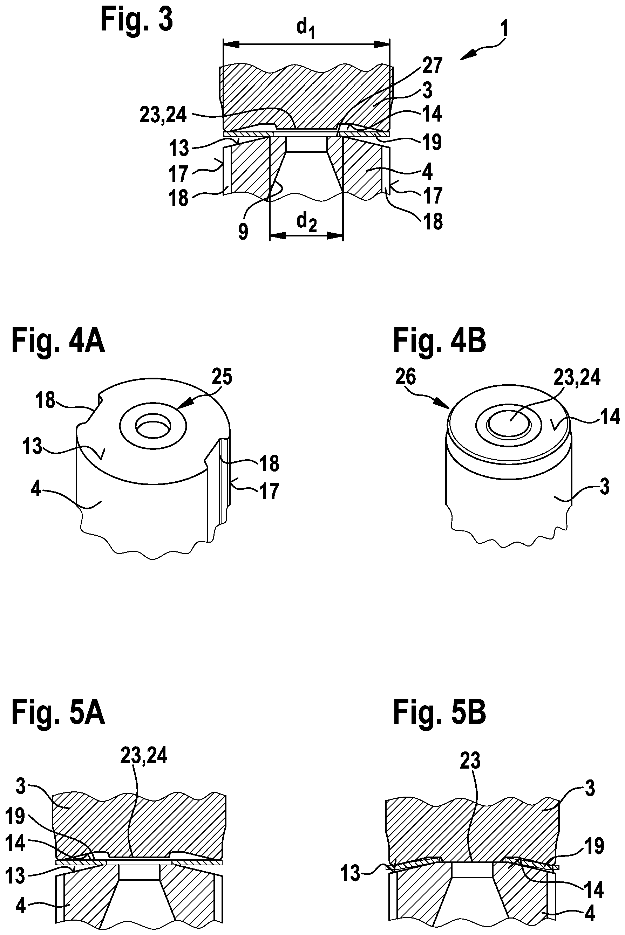

Bevorzugt ist daher das Magnetventil 1 derart ausgebildet, dass die dem Polkern 3 zugewandte Stirnfläche 13 des Ankers 4 konvex und die dem Anker 4 zugewandte Stirnfläche 14 des Polkerns 3 konkav ausgebildet ist, wie in Figur 3 in einer vergrößerten Längsschnittdarstellung des Magnetventils 1 gezeigt. Figur 3 zeigt hierbei lediglich den Polkern 3, den Anker 4 sowie die dazwischen angeordnete Scheibenfeder 19. In Figur 3 ist eindeutig zu erkennen, dass die Scheibenfeder 19 aufgrund der vorteilhaften Ausbildung des Magnetventils 1 an ihrem Außenumfang an dem Polkern 3 und mittig an dem Anker 4 aufliegt, sodass die Längsnuten 18 des Ankers 4 die Federsteifigkeit der Scheibenfeder 19 nicht beeinflussen können, unabhängig von der Rotationslage der Scheibenfeder 19. Wie in Figur 2 dargestellt, weist die ringförmige Scheibenfeder 19 eine zentrische Öffnung 22 auf. Deren Innendurchmesser ist zweckmäßigerweise größer gewählt als der Außendurchmesser des über die Stirnseite 13 hinausragenden Druckstücks 10, sodass dieses durch die Scheibenfeder 19 hindurch in Anlagekontakt mit dem Polkern 3 gelangen kann.

Figuren 4A und 4B zeigen eine perspektivische Darstellung des Ankers 4 (Figur 4A) und des Polkerns 3 (Figur 4B), wobei der zwischen der Scheibenfeder 19 und dem Anker 4 beziehungsweise dem Polkern 3 gebildete Linienkontakt 25 beziehungsweise 26, der gemäß der vorteilhaften Ausbildung des Magnetventils 1 vorliegt, eingezeichnet ist.

Wie in Figur 3 dargestellt, weist der Polkern 3 weiterhin einen Axialvorsprung 23 an seiner Stirnfläche 14 auf. Der Axialvorsprung 23 ist mittig beziehungsweise koaxial angeordnet beziehungsweise ausgerichtet und bildet einen Axialanschlag 24 für den Anker 4. Die Stirnfläche 13 des Ankers 4 weist mittig eine von der konvexen Form abweichende ebene Auflagefläche 27 auf, die den maximalen Auflagebereich der Scheibenfeder 19 an dem Anker 4 bestimmt. Der Innendurchmesser der Öffnung 22 der Scheibenfeder 19 ist dabei größer gewählt als der Außendurchmesser des Axialvorsprungs 23, sodass, wenn der Anker 4 an dem Polkern 3 gezogen wird, der Axialvorsprung 23 durch die Scheibenfeder 19 hindurchdringt, und der Anker 4 mit seiner Stirnfläche 13 an dem Axialanschlag 24 anschlägt, wie in Figur 5B dargestellt.

Figuren 5A und 5B zeigen den Ausschnitt der Figur 3A in unterschiedlichen Betriebsstellungen. Gemäß Figur 5A ist das Magnetventil 1 an seinem stromlos geschlossenen Zustand, während Figur 5B das Magnetventil 1 im betätigten, also bestromten Zustand zeigt, in welchem der Anker 4 in Richtung des Polkerns 3 verlagert ist, sodass der Anker 4 mit seiner Stirnfläche 13 an dem Axialvorsprung 23 des Polkerns 3 anliegt.

Durch die vorteilhafte Geometrie des Polkerns 3, des Ankers 4 sowie der Scheibenfeder 19 wird stets ein Linienkontakt 25, 26 in Form eines Kreises, wie in Figuren 4A und 4B dargestellt, gewährleistet. Dies ermöglicht die Verwendung von Scheibenfedern 19 mit Radialaussparungen, wie sie in Figur 2 dargestellt sind, da unabhängig von der Rotationsstellung der Scheibenfeder die Feder-Charakteristik erhalten bleibt. Die Dauerhaltbarkeit der verwendeten Scheibenfeder nimmt darüber hinaus aufgrund der durchlaufenden Auflagefläche beziehungsweise des durchgehenden Linienkontakts zu, wobei der Linienkontakt bei der Scheibenfeder 19 mit Radialaussparungen 20 natürlich nicht durchgehend, aber regelmäßig (in Umfangsrichtung gesehen) und zuverlässig vorliegt, unabhängig von der Rotationsstellung der Scheibenfeder 19. Über den Durchmesser d₁ des Polkerns 3 und den Durchmesser d₂ der Auflagefläche 27 des Ankers 4 kann die Feder-Charakteristik angepasst werden. Durch Variation dieser Maße wird der Hebelarm und somit die Federkennlinie der Scheibenfeder 19 verändert. Der Axialanschlag 24 für den Anker 4 ermöglicht insbesondere bei einer Montage des Magnetventils 1 eine genaue Einstellung und Überprüfung der Vorspannkraft der Druckfeder 10 und der Scheibenfeder 19.

## Patentansprüche

1. Magnetventil (1), insbesondere für ein hydraulisches Bremssystem eines Kraftfahrzeugs, mit einer Ventilhülse (2), in der ein Polkern (3) fest und ein Anker (4) axial verlagerbar angeordnet sind, wobei der Anker (4) mindestens eine Längsnut (18) in seiner Mantelaußenfläche (17) aufweist und wobei eine Scheibenfeder (19) zwischen dem Anker (4) und dem Polkern (3) verspannt/verspannbar gehalten ist, wobei die dem Polkern (3) zugewandte Stirnfläche (13) des Ankers zumindest im Wesentlichen konvex und die dem Anker (4) zugewandte Stirnfläche (14) des Polkerns (3) zumindest im Wesentlichen konkav ausgebildet ist, und wobei die Scheibenfeder (19) ringförmig ausgebildet ist, **dadurch gekennzeichnet, dass** die Stirnfläche (13) des Polkerns (3) wenigstens einen mittig angeordneten Axialvorsprung (23) als Axialanschlag (24) für den Anker (4) aufweist, wobei der Axialvorsprung (23) einen Außendurchmesser aufweist, der kleiner als der Innendurchmesser der Scheibenfeder (19) ausgebildet ist.

2. Magnetventil nach Anspruch 1, **dadurch gekennzeichnet, dass** die Scheibenfeder (19) mindestens eine Radialaussparung (20) an ihrem Außenumfang aufweist.

3. Magnetventil nach einem der vorhergehenden Ansprüche, **dadurch gekennzeichnet, dass** die Scheibenfeder (19) einer Vielzahl von über ihren Außenumfang insbesondere gleichmäßig verteilt angeordneten Aussparungen aufweist.

4. Magnetventil nach einem der vorhergehenden Ansprüche, **dadurch gekennzeichnet, dass** der Anker (4) in der dem Polkern (3) zugewandten Stirnfläche (13) eine Öffnung (22) aufweist, durch welche ein in dem Anker (4) gelagertes Druckstück (10) bereichsweise verfahrbar ist.

5. Magnetventil nach einem der vorhergehenden Ansprüche, **dadurch gekennzeichnet, dass** der Durchmesser der Öffnung (22) kleiner ist als der Außendurchmesser des Axialvorsprungs (23).

6. Bremssystem, insbesondere für ein Kraftfahrzeug, mit wenigstens einem Magnetventil zum Steuern und/oder Regeln eines Drucks und/oder eines Volumenstroms eines Hydraulikmediums des Bremssystems, **gekennzeichnet durch** die Ausbildung des Magnetventils (1) nach einem oder mehreren der vorhergehenden Ansprüche.

## Claims

1. Solenoid valve (1), particularly for an hydraulic braking system of a motor vehicle, having a valve sleeve (2), in which a pole core (3) is fixed and an armature (4) is arranged so that it is axially displaceable, wherein the armature (4) comprises at least one longitudinal groove (18) in the outer shell surface (17) thereof, and wherein a disk spring (19) is/can be braced between the armature (4) and the pole core (3), wherein the end face (13) of the armature facing the pole core (3) is of at least substantially convex design and the end face (14) of the pole core (3) facing the armature (4) is of at least substantially concave design, and wherein the disk spring (19) is of annular design, **characterized in that** the end face (13) of the pole core (3) comprises at least one centrally arranged axial projection (23) as an axial stop (24) for the armature (4), wherein the axial projection (23) has an outside diameter which is smaller than the inside diameter of the disk spring (19).

2. Solenoid valve according to Claim 1, **characterized in that** the disk spring (19) comprises at least one radial recess (20) on its outer circumference.

3. Solenoid valve according to one of the preceding claims, **characterized in that** the disk spring (19) comprises a plurality of recesses distributed, in particular uniformly, over its outer circumference.

4. Solenoid valve according to one of the preceding claims, **characterized in that** the armature (4), in the end face (13) facing the pole core (3), comprises an opening (22), through which in certain areas a thrust piece (10), supported in the armature (4), is displaceable.

5. Solenoid valve according to one of the preceding claims, **characterized in that** the diameter of the opening (22) is smaller than the outside diameter of the axial projection (23).

6. Braking system, particularly for a motor vehicle, having at least one solenoid valve for controlling and/or regulating a pressure and/or a volumetric flow of an hydraulic medium of the braking system, **characterized by** the design of the solenoid valve (1) according to one or more of the preceding claims.

## Revendications

1. Électrovanne (1), en particulier pour un système de freinage hydraulique d'un véhicule automobile, comprenant une douille de soupape (2) dans laquelle un noyau de pôle (3) est disposé de manière fixe et un induit (4) est disposé de manière déplaçable axialement, l'induit (4) présentant au moins une rainure longitudinale (18) dans sa surface d'enveloppe extérieure (17), et un ressort à disque (19) étant retenu de manière serrée/serrable entre l'induit (4) et le noyau de pôle (3), la surface frontale (13) de l'induit tournée vers le noyau de pôle (3) étant réalisée de manière au moins essentiellement convexe et la surface frontale (14) du noyau de pôle (3) tournée vers l'induit (4) étant réalisée de manière au moins essentiellement concave, et le ressort à disque (19) étant réalisé sous forme annulaire, **caractérisée en ce que** la surface frontale (13) du noyau de pôle (3) présente au moins une saillie axiale disposée centralement (23) en tant que butée axiale (24) pour l'induit (4), la saillie axiale (23) présentant un diamètre extérieur qui est inférieur au diamètre intérieur du ressort à disque (19).

2. Électrovanne selon la revendication 1, **caractérisée en ce que** le ressort à disque (19) présente au moins un évidement radial (20) au niveau de sa périphérie extérieure.

3. Électrovanne selon l'une quelconque des revendications précédentes, **caractérisée en ce que** le ressort à disque (19) présente une pluralité d'évidements répartis notamment uniformément sur sa périphérie extérieure.

4. Électrovanne selon l'une quelconque des revendications précédentes, **caractérisée en ce que** l'induit (4) présente dans la surface frontale (13) tournée vers le noyau de pôle (3) une ouverture (22) à travers laquelle une pièce de pression (10) supportée dans l'induit (4) peut être déplacée en partie.

5. Électrovanne selon l'une quelconque des revendications précédentes, **caractérisée en ce que** le diamètre de l'ouverture (22) est inférieur au diamètre extérieur de la saillie axiale (23).

6. Système de freinage, en particulier pour un véhicule automobile, comprenant au moins une électrovanne pour commander et/ou réguler une pression et/ou un débit volumique d'un fluide hydraulique du système de freinage, **caractérisé par** la réalisation de l'électrovanne (1) selon l'une quelconque ou plusieurs des revendications précédentes.
